# EUROPEAN PATENT SPECIFICATION

(11) **EP 1 005 690 B1**
(45) Date of publication and mention of the grant of the patent: **05.04.2017**
(21) Application number: 99930559.2
(22) Date of filing: 22.06.1999
(51) Int. Cl.: G06F 3/033

(54) **LOW COST FORCE FEEDBACK DEVICES**
NIEDRIGKOSTEN-KRAFTRÜCKKOPPLUNGSVORRICHTUNGEN
DISPOSITIFS DE RETOUR D'EFFORT A FAIBLE COUT

(30) Priority: 23.06.1998 US 103281; 17.09.1998 US 156802; 18.02.1999 US 253132
(43) Date of publication of application: 07.06.2000
(60) Divisional application: 10181405.1
(73) Proprietor: Immersion Corporation, San Jose CA 95134 (US)
(72) Inventor: ROSENBERG, Louis, B., San Jose, CA 95132 (US)
(74) Representative: Weston, Robert Dale
(86) International application number: PCT/US1999/014085
(87) International publication number: WO 1999/066997

(56) References cited:
- WO-A-97/31333
- WO-A-98/06024
- JP-A- 6 102 997
- JP-A- 6 202 801
- JP-A- H07 182 104
- US-A- 5 313 230
- US-A- 5 589 854
- US-A- 5 643 087
- US-A- 5 694 013
- US-A- 5 734 373
- US-A- 5 790 108

## Description

### BACKGROUND OF THE INVENTION

The present invention relates generally to interface devices for allowing humans to interface with computer systems, and more particularly to computer interface devices that allow the user to provide input to computer systems and allow computer systems to provide force feedback to the user.

A user can interact with an environment displayed by a computer to perform functions and tasks on the computer, such as playing a game, experiencing a simulation or virtual reality environment, using a computer aided design system, operating a graphical user interface (GUI), etc. Common human-computer interface devices used for such interaction include a joystick, mouse, trackball, steering wheel, stylus, tablet, pressure-sensitive sphere, or the like, that is connected to the computer system controlling the displayed environment. Typically, the computer updates the environment in response to the user's manipulation of a physical manipulandum such as a joystick handle or mouse, and provides visual and audio feedback to the user utilizing the display screen and audio speakers. The computer senses the user's manipulation of the user object through sensors provided on the interface device that send locative signals to the computer. For example, the computer displays a cursor or other graphical object in a graphical environment, where the location of the cursor is responsive to the motion of the user object.

In some interface devices, tactile and/or haptic feedback is also provided to the user, more generally known as "force feedback." These types of interface devices can provide physical sensations which are felt by the user manipulating a user manipulandum of the interface device. For example, the Logitech Wingman Force joystick controller from Logitech, Inc., the Logitech Wingman Formula Force steering wheel, or the Feelit Mouse from Immersion Corporation may be connected to a computer and provides forces in the degrees of freedom of motion of the joystick, wheel, or mouse to a user of the controller. One or more motors or other actuators are coupled to the joystick or mouse and are connected to the controlling computer system. The computer system controls forces on the joystick or mouse in conjunction and coordinated with displayed events and interactions by sending control signals or commands to the actuators. The computer system can thus convey physical force sensations to the user in conjunction with other supplied feedback as the user is grasping or contacting the physical object of the interface device. For example, when the user moves the manipulatable object and causes a displayed cursor to interact with a different displayed graphical object, the computer can issue a command that causes the actuator to output a force on the physical object, convoying a feel sensation to the user.

One problem with current force feedback controllers in the home consumer market is the high manufacturing cost of such devices, which makes the devices expensive for the consumer. A large part of this manufacturing expense is due to the inclusion of multiple actuators and corresponding control electronics in the force feedback device.. In addition, high quality mechanical and force transmission components such as linkages and bearings must be provided to accurately transmit forces from the actuators to the user manipulandum and to allow accurate sensing of the motion of the user object. These components are complex and require greater precision in their manufacture than many of the other components in an interface device, and thus further add to the cost of the device. A need therefore exists for a force feedback device that is lower in cost to manufacture yet offers the user force feedback to enhance the interaction with computer applications.

JP-A-06 202 801 discloses a mouse held by an operator and able to perform a haptic effect on the operator's hand.

WO-A-98/06 024 discloses an Internet network system in which a force feedback sensation (haptic effect) can be applied to an operator.

And JP-A-07 182 104 discloses a stylus on which the preambles of the independent claims are based, but that has no haptic effect.

### SUMMARY OF THE INVENTION

The present invention is directed to a low-cost force feedback interface which provides low cost force feedback for enhancing interactions and manipulations in computer-generated environments such as displayed graphical environments according to the claims.

More specifically, in one embodiment the present invention relates to a force feedback interface device that is coupled to a host computer system which implements a host application program. The interface device includes a stylus contacted by a user and movable in physical space in at least one primary degree of freedom. At least one sensor detects the movement of the user object in the degree of freedom and outputs sensor signals representative of the movement. An actuator is coupled to the user manipulatable object and applies a linear output force along a non-primary axis extending through the user manipulatable object, where the force is output in a degree of freedom not sensed by the sensor. Preferably, there are no other actuators in the device. Force sensations such as a jolt, vibration, a constant force, and a texture force can be output on the user object with the actuator.

In preferred embodiments, the actuator outputs the force directly on the user manipulatable object, such that no transmission system is required to be provided between the actuator and the user manipulatable object, thus greatly reducing the cost of the device. In addition, the actuator can include a physical spring or other spring device for biasing said at least a portion of the user manipulatable object toward an extended position. The actuator can take a variety of forms, such as a linear voice coil actuator, a linear solenoid, or a voice magnet. A microprocessor local to the interface device can be provided to receive host commands from the host computer and output force signals to the actuator for controlling the output force on the user object. A sensor can be coupled to the actuator to determine a position of the user manipulatable object in the degree of freedom of the actuator.

In one embodiment in which the user manipulatable object is moved in a planar degree of freedom, the output force of the actuator can be provided in a direction approximately perpendicular to the plane of motion. For example, in a mouse embodiment, the force is applied about perpendicularly to the planar mouse workspace and is applied to an entire portion of the mouse that is grasped or rested upon by the user's hand. In a particular mouse embodiment, the actuator is coupled to a housing of the mouse and moves a portion of the housing in the perpendicular direction. Such a moveable portion of the housing can be a cover portion of the housing that is movably coupled to a base portion of the housing. The output force can be correlated with a graphical representation and cursor displayed by the host computer.

The stylus can be movable in physical space in a plurality of degrees of freedom with respect to a ground, and a linear actuator applies a linear output force only along a lengthwise axis of the user manipulatable object and not in the plurality of degrees of freedom, where the sensor can be included in a tablet which is contacted by the stylus.

The present invention advantageously provides a force feedback device that is significantly lower in cost than other types of force feedback devices and is thus quite suitable for home consumer applications. A single actuator can be provided that directly applies force to the user manipulatable object, thus saving cost by the elimination of multiple actuators and complex force transmission and control systems. A single actuator can also be provided that directly applies force in the degree of freedom of a mouse button or to the command gesture motion of a pointing device such as a cylinder. The actuator does not output force in a main sensed degree of freedom of the device, thus allowing sensors to read the position of the user object without substantial interference from forces and also simplifying the control of output forces. The actuator of the present invention can provide a variety of different types of force sensations to enhance the user's experience and interface with a computer application.

These and other advantages of the present invention will become apparent to those skilled in the art upon a reading of the following specification of the invention and a study of the several figures of the drawing.

### BRIEF DESCRIPTION OF THE DRAWINGS

FIGURE 1 is a block diagram of a system including a host computer and a force feedback interface device of the present invention;
FIGURE 2 is a side elevational view of a linear voice coil actuator suitable for use with the present invention;
FIGURE 3 is a perspective view of a joystick embodiment of the force feedback device of the present disclosure;
FIGURE 4 is a side elevational view of a mouse embodiment of the force feedback device of the present disclosure;
FIGURE 5 is a perspective view of a steering wheel embodiment of the force feedback device of the present disclosure;
FIGURE 6 is a side elevational view of a stylus embodiment of the force feedback device of the present invention; and
FIGURE 7 is a side elevational view of a different stylus embodiment of the force feedback device of Figure 6.
FIGURE 8 is a perspective view of another aspect of the present disclosure including a mouse of connected to a host computer;
FIGURE 9 is a side cross sectional view of the mouse of Fig. 8;
FIGURE 10 is a side elevational view of a voice coil actuator suitable for use with the present invention;
FIGURE 11 is a block diagram of the mouse and host computer of the present disclosure;
FIGURE 12 is a diagrammatic view of a display screen showing graphical objects associated with force sensations output using the mouse of the present disclosure; and
FIGURES 13a and 13b are perspective and side elevational views, respectively, of a second pointing device of the present disclosure providing low cost force feedback.

### DETAILED DESCRIPTION OF PREFERRED EMBODIMENTS

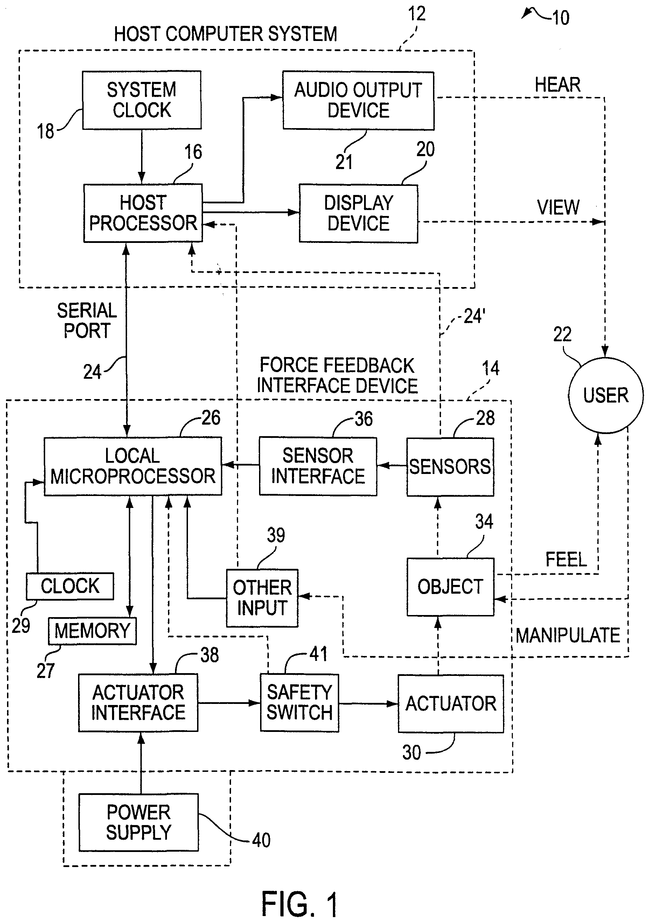

FIGURE 1 is a block diagram illustrating a force feedback interface system 10 of the present invention controlled by a host computer system. Interface system 10 includes a host computer system 12 and an interface device 14.

Host computer system 12 is preferably a personal computer, such as a Pentium-class (IBM-compatible) PC or Macintosh personal computer, or a workstation, such as a SUN or Silicon Graphics workstation. For example, the host computer system can a personal computer which operates under the Windows, MS-DOS, MacOS or Linux operating systems. Alternatively, host computer system 12 can be one of a variety of home video game systems commonly connected to a television set, such as systems available from Nintendo, Sega, or Sony. In other embodiments, home computer system 12 can be a television "set top box" or a "network computer" which can be used, for example, to provide interactive computer functions to users over networks, or other appliance having computer functions.

In the described embodiment, host computer system 12 implements a host application program with which a user 22 is interacting via peripherals and interface device 14. For example, the host application program can be a video game, web browser/web page that implements HTML or VRML instructions, scientific analysis program, operating system, graphical user interface, medical simulation, or other application program that utilizes force feedback. Herein, for simplicity, operating systems such as Windows™, MS-DOS, MacOS, Unix, etc. are also referred to as "application programs." Typically, the host application provides images to be displayed on a display output device, as described below, and/or other feedback, such as auditory signals. The application program and host computer provide a graphical environment with which the user may interact. For example, the graphical environment may display graphical objects, such as icons, windows, or 3-D objects; or entities, such as a player-controlled simulated vehicle or character. Suitable software drivers which interface software with computer input/output (I/O) and force feedback devices are available from Immersion Human Interface Corporation of San Jose, California.

Host computer system 12 preferably includes a host microprocessor 16, a clock 18, a display screen 20, and an audio output device 21. The host computer also includes other well known components, such as random access memory (RAM), read-only memory (ROM), and input/output (I/O) electronics (not shown). Host microprocessor 16 can include a variety of available microprocessors from Intel, AMD, Cyrix, Motorola, or other manufacturers. Microprocessor 16 can be single microprocessor chip, or can include multiple primary and/or coprocessors. Microprocessor preferably retrieves and stores instructions and other necessary data from RAM and ROM, as is well known to those skilled in the art. In the described embodiment, host computer system 12 can receive locative data or a sensor signal via a bus 24 from sensors of interface device 14 and other information. Microprocessor 16 can receive data from bus 24 using I/O electronics 21, and can use I/O electronics to control other peripheral devices. Host computer system 12 can also output a command to interface device 14 via bus 24 to cause force feedback for the interface device. Clock 18 is a standard clock crystal or equivalent component used by host computer system 12 to provide timing to electrical signals used by microprocessor 16 and other components of the computer system.

Display screen 20 is coupled to host microprocessor 16 by suitable display drivers and can be used to display images generated by host computer system 12 or other computer systems. Display screen 20 can be a standard display screen, CRT, flat-panel display, 3-D goggles, or any other visual interface. In a described embodiment, display screen 20 displays images of a simulation, game environment, operating system application, etc. For example, images describing a point of view from a first-person perspective can be displayed, as in a virtual reality simulation or game. Or, images describing a third-person isometric perspective of objects, backgrounds, etc., or a 2-D image of a graphical user interface can be displayed. User 22 of the host computer 12 and interface device 14 can receive visual feedback by viewing display screen 20. Herein, computer 12 may be referred as displaying computer or graphical "objects" or "entities". These computer objects are not physical objects, but is a logical software unit collections of data and/or procedures that may be displayed as images by computer 12 on display screen 20, as is well known to those skilled in the art.

Audio output device 21, such as speakers, is preferably coupled to host microprocessor 16 via amplifiers, filters, and other circuitry well known to those skilled in the art. Host processor 16 outputs signals to speakers 21 to provide sound output to user 22 when an "audio event" occurs during the implementation of the host application program. Other types of peripherals can also be coupled to host processor 16, such as storage devices (hard disk drive, CD ROM drive, floppy disk drive, etc.), printers, and other input and output devices.

An interface device 14 is coupled to host computer system 12 by a bi-directional bus 24. The bi-directional bus sends signals in either direction between host computer system 12 and the interface device. Herein, the term "bus" is intended to generically refer to an interface such as between host computer 12 and microprocessor 26 which typically includes one or more connecting wires, wireless connection, or other connections and that can be implemented in a variety of ways. In the preferred embodiment, bus 24 is a serial interface bus providing data according to a serial communication protocol. An interface port of host computer system 12, such as an RS232 serial interface port, connects bus 24 to host computer system 12. Other standard serial communication protocols can also be used in the serial interface and bus 24, such as RS-422, Universal Serial Bus (USB), MIDI, or other protocols well known to those skilled in the art. For example, the USB standard provides a relatively high speed serial interface that can provide force feedback signals in the present invention with a high degree of realism. An advantage of the microprocessor-enabled local control of system 10 is that low-bandwidth serial communication signals can be used to interface with interface device 14, thus allowing a standard built-in serial interface of many computers to be used as bus 24. Alternatively, a parallel port of host computer system 12 can be coupled to a parallel bus 24 and use a parallel protocol, such as SCSI or PC Parallel Printer Bus. Also, bus 24 can be connected directly to a data bus of host computer system 12 using, for example, a plug-in card and slot or other access of computer 12. Bus 24 can be implemented within a network such as the Internet or a LAN; or, bus 24 can be a channel such as the air, etc. for wireless communication. In another embodiment, one or more additional buses can be included to communicate between host computer system 12 and interface device 14 for an increased data bandwidth.

Interface device 14 includes a local microprocessor 26, sensors 28, actuator 30, a user object 34, optional sensor interface 36, an optional actuator interface 38, and other optional input devices 39. Interface device 14 may also include additional electronic components for communicating via standard protocols on bus 24. In the preferred embodiment, multiple interface devices 14 can be coupled to a single host computer system 12 through bus 24 (or multiple buses 24) so that multiple users can simultaneously interface with the host application program (in a multi-player game or simulation, for example). In addition, multiple players can interact in the host application program with multiple interface devices 14 using networked host computers 12, as is well known to those skilled in the art.

Local microprocessor 26 can optionally be included within the housing of interface device 14 to allow efficient communication with other components of the interface device. Processor 26 is considered local to interface device 14, where "local" herein refers to processor 26 being a separate microprocessor from any processors in host computer system 12. "Local" also preferably refers to processor 26 being dedicated to force feedback and sensor I/O of interface device 14, and preferably being closely coupled to sensors 28 and actuators 30, such as within the housing for interface device or in a housing coupled closely to interface device 14. Microprocessor 26 can be provided with software instructions to wait for commands or requests from computer host 16, decode the command or request, and handle/control input and output signals according to the command or request. In addition, processor 26 preferably operates independently of host computer 16 by reading sensor signals and calculating appropriate forces from those sensor signals, time signals, and stored or relayed instructions selected in accordance with a host command. Suitable microprocessors for use as local microprocessor 26 include the MC68HC711E9 by Motorola, the PIC16C74 by Microchip, and the 82930AX by Intel Corp., for example. Microprocessor 26 can include one microprocessor chip, or multiple processors and/or co-processor chips. In other embodiments, microprocessor 26 can include digital signal processor (DSP) capability.

Microprocessor 26 can receive signals from sensors 28 and provide signals to actuator 30 of the interface device 14 in accordance with instructions provided by host computer 12 over bus 24. For example, in a local control embodiment, host computer 12 provides high level supervisory commands to microprocessor 26 over bus 24, and microprocessor 26 manages low level force control loops to sensors and the actuator in accordance with the high level commands and independently of the host computer 18. In the host control loop, force commands are output from the host computer to microprocessor 26 and instruct the microprocessor to output a force or force sensation having specified characteristics. The local microprocessor 26 reports data to the host computer, such as locative data that describes the position of the user object 34 in one or more provided degrees of freedom. The data can also describe the states of buttons 39 and safety switch 41. The host computer uses the data to update executed programs. In the local control loop, actuator signals are provided from the microprocessor 26 to actuator 30 and sensor signals are provided from the sensors 28 and other input devices 39 to the microprocessor 26. Herein, the term " force sensation" refers to either a single force or a sequence of forces output by the actuators 30 which provide a sensation to the user. For example, vibrations, a single jolt, or a spring force are all considered force sensations. The microprocessor 26 can process inputted sensor signals to determine appropriate output actuator signals by following stored instructions. The force process can command distinct force sensations, such as vibrations, textures, jolts, or even simulated interactions between displayed objects. The sensors 28 provide sensor signals to the microprocessor 26 indicating a position (or other information) of the user object in degrees of freedom. The microprocessor may use the sensor signals in the local determination of forces to be output on the user object, as well as reporting locative data derived from the sensor signals to the host computer.

For example, it is preferable that host computer 14 send a "spatial representation" to the local microprocessor 26, which is data describing the locations of some or all the graphical objects displayed in a GUI or other graphical environment which are associated with forces and the types/characteristics of these graphical objects. The microprocessor can store such a spatial representation in local memory 27, and thus will be able to determine interactions between the user object and graphical objects (such as the rigid surface) independently of the host computer. In addition, the microprocessor can be provided with the necessary instructions or data to check sensor readings, determine cursor and target positions, and determine output forces independently of host computer 18. The host could implement program functions (such as displaying images) when appropriate, and synchronization commands can be communicated between the microprocessor and host 18 to correlate the microprocessor and host processes. Also, the local memory can store predetermined force sensations for the microprocessor that are to be associated with particular types of graphical objects.

In yet other embodiments, other hardware can be provided locally to interface device 14 to provide functionality similar to microprocessor 26. For example, a hardware state machine incorporating fixed logic can be used to provide signals to the actuator 30 and receive sensor signals from sensors 28, and to output force signals according to a predefined sequence, algorithm, or process. Techniques for implementing logic with desired functions in hardware are well known to those skilled in the art. Such hardware can be better suited to less complex force feedback devices, such as the device of the present invention.

In a different, host-controlled embodiment, host computer 12 can provide low-level force commands over bus 24, which are directly transmitted to the actuator 30. Host computer 12 thus directly controls and processes all signals to and from the interface device 14, e.g. the host computer directly controls the forces output by actuator 30 and directly receives sensor signals from sensors 28 and input devices 39. This embodiment may be desirable to reduce the cost of the force feedback device yet further, since no local microprocessor 26 need be included. Furthermore, since only one actuator 30 can be used with forces not provided in the primary sensed degrees of freedom, the local control of forces by microprocessor 26 may not be necessary in the present invention to provide the desired quality of forces.

Local memory 27, such as RAM and/or ROM, is preferably coupled to microprocessor 26 in interface device 14 to store instructions for microprocessor 26 and store temporary and other data. For example, force profiles can be stored in memory 27, such as a sequence of stored force values that can be output by the microprocessor, or a look-up table of force values to be output based on the current position of the user object. In addition, a local clock 29 can be coupled to the microprocessor 26 to provide timing data, similar to system clock 18 of host computer 12; the timing data might be required, for example, to compute forces output by actuators 30 (e.g., forces dependent on calculated velocities or other time dependent factors). In embodiments using the USB communication interface, timing data for microprocessor 26 can be alternatively retrieved from the USB signal.

In the preferred embodiment, sensors 28, actuator 30, and microprocessor 26, and other related electronic components are included in a housing for interface device 14, to which user object 34 is directly or indirectly coupled. Alternatively, microprocessor 26 and/or other electronic components of interface device 14 can be provided in a separate housing from user object 34, sensor 28, and actuator 30.

Sensors 28 senses the position, motion, and/or other characteristics of a user object 34 of the interface device 14 along one or more primary degrees of freedom and provide signals to microprocessor 26 including information representative of those characteristics. Herein, the term "primary" degree of freedom or "primary" axis refers to the degrees of freedom which are sensed to control a graphical object or entity implemented by computer system 12. For example, the planar degrees of freedom of a mouse or the two rotary degrees of freedom of a standard joystick are primary degrees of freedom. A twisting third degree of freedom of some joysticks can also be considered a primary degree of freedom. Typically, a sensor 28 is provided for each primary degree of freedom along which object 34 can be moved. For example, in a joystick or mouse, each of sensors 28 senses the position of the user object 34 in a degree of freedom of motion. Alternatively, a single compound sensor can be used to sense position or movement in multiple degrees of freedom. An example of sensors suitable for several embodiments described herein are digital optical encoders, which sense the change in position of an object about a rotational axis and provide digital signals indicative of the change in position. A suitable optical encoder is the "Softpot" from U.S. Digital of Vancouver, Washington. Linear optical encoders, potentiometers, optical sensors, velocity sensors, acceleration sensors, strain gauge, or other types of sensors can also be used, and either relative or absolute sensors can be provided.

Sensors 28 provide an electrical signal to an optional sensor interface 36, which can be used to convert sensor signals to signals that can be interpreted by the microprocessor 26 and/or host computer system 12. For example, sensor interface 36 can receive two phase-related signals from a sensor 28 and converts the two signals into another pair of clock signals, which drive a bi-directional binary counter. The output of the binary counter is received by microprocessor 26 as a binary number representing the angular position of the encoded shaft. Such circuits, or equivalent circuits, are well known to those skilled in the art; for example, the Quadrature Chip LS7166 from Hewlett Packard, California performs the functions described above. If analog sensors 28 are used, an analog to digital converter (ADC) can convert the analog signal to a digital signal that is received by microprocessor 26 and/or host computer system 12. Each sensor 28 can be provided with its own sensor interface, or one sensor interface may handle data from multiple sensors. Alternately, microprocessor 26 can perform the sensor interface functions. The position value signals can be used by microprocessor 26 and are also sent to host computer system 12 which updates the host application program and sends force control signals as appropriate. In alternate embodiments, sensor signals from sensors 28 can be provided directly to host computer system 12 as shown by bus 24', bypassing microprocessor 26.

Actuator 30 transmits forces to user object 34 of the interface device 14 in one or more directions along a non-primary degree of freedom in response to signals received from microprocessor 26. Actuator 30 can generally be of two types: an active actuator and a passive actuator. Active actuators include linear current control motors, stepper motors, pneumatic/hydraulic active actuators, a torquer (motor with limited angular range), a voice coil actuators, and other types of actuators that transmit a force to move an object. For example, an active actuator can drive a linear shaft along a linear degree of freedom. Active transducers of the present invention are preferably bi-directional, meaning they can selectively transmit force along either direction of a degree of freedom. For example, DC servo motors can receive force control signals to control the direction and magnitude of force that is produced on a shaft. A passive actuator can also be used for actuator 30; such actuators include magnetic particle brakes, friction brakes, or pneumatic/hydraulic passive actuators which can be used in addition to or instead of a motor to generate a damping resistance or friction in a degree of motion. A preferred type of actuator for use in the present invention is a linear magnetic actuator, such as a linear voice coil, linear voice magnet, or linear solenoid. Rotary actuators having output that is converted to linear force/motion can also be used.

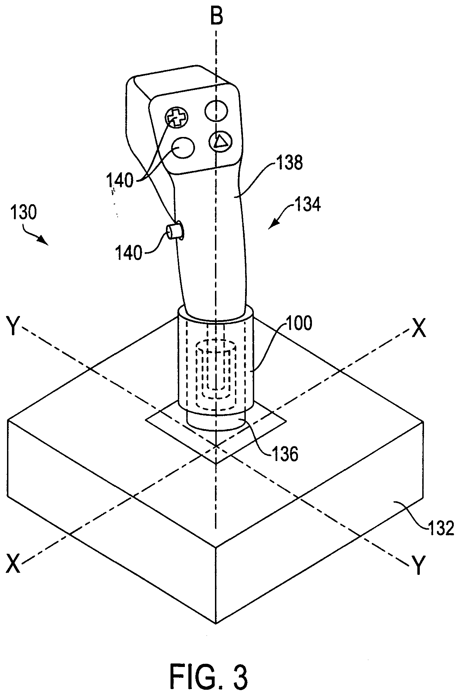

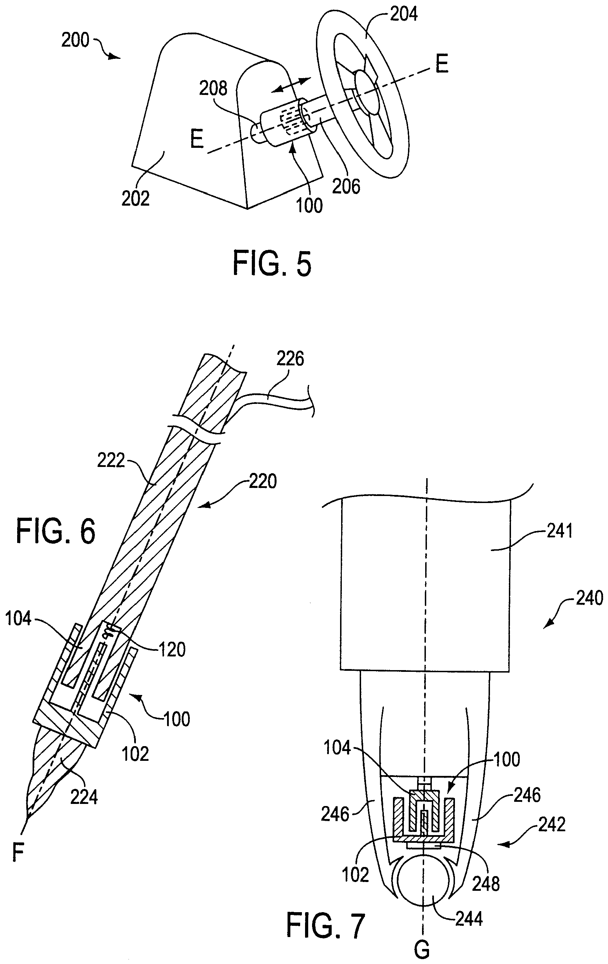

In the preferred embodiment of the present invention, actuator 30 is provided to generate force approximately perpendicular to the degrees of freedom of motion of the user manipulatable object 34, i.e., a force is transmitted along a "non-primary" axis or degree of freedom of the user manipulatable object that is approximately perpendicular to the plane of motion of the user manipulatable object (if planar motion is provided) or that is approximately radial to the sphere or circle of motion of the user manipulatable object (if spherical motion is provided). The actuator 30 can apply force along the lengthwise ("in-line") axis of the user object itself in the case of a joystick or stylus (Figs. 3 and 6, below). Thus, the actuator 30 does not generate force in the primary degrees of freedom of motion of the user object, but instead provides "informative" or "effect" forces that do not resist or assist motion. These forces are preferably provided in an unsensed degree of freedom that is not used to control a host-implemented graphical object/entity or provide user-controlled data to the host computer. The sensors 28 detect the position/motion of the user object 34 in its primary degrees of freedom, and this sensing is in no way affected by the output of forces by actuator 30. This configuration allows the actuator 30 to be included in force feedback device 14 at much less cost, since only one actuator 30 need be provided. Furthermore, in the preferred embodiments, actuator 30 is provided in a direct-drive system, i.e. a system in which the actuator outputs forces directly to the user manipulatable object, where no transmission system need be employed between actuator and user object. This further reduces the cost of the force feedback device since no complex transmission system need be manufactured and assembled in the device. Examples of embodiments utilizing actuator 30 are described below. Alternate embodiments can employ additional actuators for providing forces in the degrees of freedom of the user object 34. Other alternate embodiments might employ an additional sensor to sense motion of the user object (or portion of the user object) that can move in the linear, non-primary degree of freedom.

Actuator interface 38 can be optionally connected between actuator 30 and microprocessor 26. Interface 38 converts signals from microprocessor 26 into signals appropriate to drive actuator 30. Interface 38 can include power amplifiers, switches, digital to analog controllers (DACs), analog to digital controllers (ADCs), and other components, as is well known to those skilled in the art. In alternate embodiments, interface 38 circuitry can be provided within microprocessor 26, in actuator 30, or in host computer 12.

Other input devices 39 can optionally be included in interface device 14 and send input signals to microprocessor 26 or to host processor 16. Such input devices can include buttons, dials, switches, or other mechanisms. For example, in embodiments where user object 34 is a joystick, other input devices can include one or more buttons provided, for example, on the joystick handle or base and used to supplement the input from the user to a game or simulation. The operation of such input devices is well known to those skilled in the art.

Power supply 40 can optionally be coupled to actuator interface 38 and/or actuator 30 to provide electrical power to the actuator. Power supply 40 can be included within the housing of interface device 14, or be provided as a separate component. Alternatively, if the USB or a similar communication protocol is used, interface device 14 and actuator 30 can draw power from the USB and thus have no need for power supply 40. Also, power from the USB can be stored and regulated by interface device 14 and thus used when needed to drive actuators 30. For example, power can be stored over time in a capacitor or battery and then immediately dissipated to provide a jolt force to the user object 34.

Safety switch 41 is optionally included in interface device 14 to provide a mechanism to allow a user to deactivate actuator 30, or require a user to activate actuator 30, for safety reasons. In the preferred embodiment, the user must continually activate or close safety switch 41 during operation of interface device 14 to enable the actuator 30. If, at any time, the safety switch is deactivated (opened), power from power supply 40 is cut to actuator 30 (or the actuator is otherwise disabled) as long as the safety switch is opened. For example, one embodiment of safety switch is an optical switch located on user object 34 or on a convenient surface of a housing of interface device 14. The switch is closed when the user covers the optical switch with a hand or finger, so that the actuator 30 will function as long as the user covers the switch. Safety switch 41 can also provide a signal directly to host computer 12. Other types of safety switches 41 can be provided in other embodiments, such as an electrostatic contact switch, a button or trigger, a hand weight safety switch, etc. If the safety switch 41 is not provided, or is coupled to the microprocessor, actuator interface 38 can be directly coupled to actuator 30.

User manipulable object 34 ("user object" or "manipulandum") is a physical object, device or article that may be grasped or otherwise contacted or controlled by a user and which is coupled to interface device 14. By "grasp", it is meant that users may releasably engage a grip portion of the object in some fashion, such as by hand, with their fingertips, or even orally in the case of handicapped persons. The user 22 can manipulate and move the object along provided degrees of freedom to interface with the host application program the user is viewing on display screen 20. Object 34 can be a joystick, mouse, trackball, stylus, steering wheel, sphere, medical instrument (laparoscope, catheter, etc.), pool cue, hand grip, knob, button, or other article. Also, additional mechanical structures may be included in interface device 14 to provide object 34 with desired (primary) degrees of freedom.

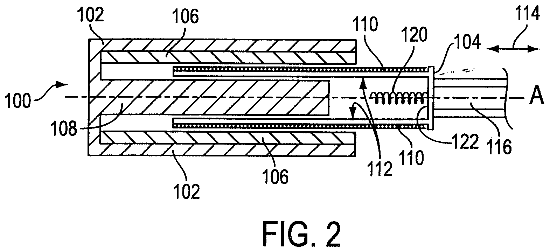

FIGURE 2 is a side sectional view of an example of a linear voice coil actuator 100 suitable for use with the present invention. Linear voice coil actuator 100 is a grounded actuator and includes a cylindrical magnetic flux housing 102 and a coil head 104. Housing 102 can be made of iron or other ferrous metal and includes a radially polarized, tubular magnet 106 (which, alternatively, can be made up of multiple, smaller magnets) positioned along the inside length of the housing and which are radially magnetized. In addition, a core portion 108 of housing 102 preferably extends down the center of housing 102 through the center of coil head 104. The housing 102, head 104, and core portion 108 can be other than cylindrically-shaped in other embodiments; for example, rectilinear or other shapes can be provided.

Coil head 104 includes a coil 110 which is wrapped around the coil head. An optional coil support 112 can be provided around which to wrap coil 110. The coil head 104 moves within the housing 102 along a linear degree of freedom, indicated by arrows 114, when an electric current is flowed through coil 110. As is well known to those skilled in the art, the electric current in the coil generates a magnetic field. The magnetic field from the coil then interacts with the magnetic fields generated by magnet 106 to produce a force and a relative motion between coil head 104 and housing 102 in a degree of freedom along axis A, as shown by arrows 114. The magnitude or strength of the force is dependent on the magnitude of the current that is applied to the coil. Likewise, the direction of the force depends on the direction of the current in the coil. In other embodiments, the coil head 104 can be made longer than the housing 102. Linear voice coil actuators are well known to those skilled in the art.

Thus, by applying a desired current magnitude and direction, force can be applied between the coil head 104 and the housing 102. In some embodiments, housing 102 is grounded, and coil head 104 is biased to move (shown in Figure 2); in other embodiments, coil head 104 can be grounded, and housing 102 is biased to move (whether actual movement of the head 104 or housing 102 occurs depends on whether an opposing force from the user or other source is applied to the moving portions, which may hinder or prevent movement). When the moving portion of the actuator moves away from the other portion, the actuator extends, and when the moving portion moves toward the other portion, the actuator contracts. A moving portion 116 of user object 34 is coupled to the moving portion of the actuator 30, so that the moving portion 116 of the user object 34 is moved by the force applied by the actuator.

A spring 120 can optionally be included in actuator 100. For example, spring 120 can be coupled to the inside surface 122 of coil head 104 and compress when the surface 122 moves toward the inner core portion 108 of the housing 102. Spring 120 is provided to bias the actuator toward an extended position. This can be useful in some embodiments in which the actuator is desired to be in a non-compressed neutral position when no force is applied to the user object. For example, if the user object is coupled to coil head 104, the user object should have some distance along axis A to compress from a rest or neutral position. The spring 120 biases the user object toward a neutral position near the center of the degree of freedom. Spring 120 can be a physical, mechanical spring or may be a "magnetic spring", i.e. a number of magnets that provide a repulsive magnetic field to cause a bias force toward a centered or neutral position. Alternatively, other types of springs can be used, such as air or other fluid compression with valves, etc.

In other embodiments, different types of actuators can be used. For example, linear voice magnet, linear solenoid, DC current controlled linear motor, a linear stepper motor controlled with pulse width modulation of an applied voltage, a pneumatic/hydraulic actuator, a torquer (motor with limited angular range), etc. Also, passive actuators can be used, such as magnetic particle brakes or fluid-controlled passive actuators. In yet other embodiments, linear force and motion in the non-primary degree of freedom can be achieved through the use of a rotary actuator, e.g. a rotary actuator outputs a torque in a rotary degree of freedom on shaft, which is converted to linear force and motion through a transmission, as is well known to those skilled in the art.

FIGURE 3 is a perspective view of a first embodiment 130 of a force feedback device 14 of the present disclosure. Force feedback device 130 includes a joystick base 132 and a joystick handle 134. Base 132 preferably includes most of the electrical components of the device 130, such as the microprocessor 26, sensors 28, sensor interface 36, power supply (if any), etc. Handle 134 preferably includes a base portion 136 and a grip portion 138. The base portion 136 is coupled to a mechanism (not shown) that allows the base portion 136 to move in two primary degrees of freedom, forward/back and left/right. Typically, these degrees of freedom are rotational degrees of freedom, such as about axes X and Y, where the axis B extends through the length of joystick handle 134 is radial with respect to a spherical workspace of the joystick moving in the two rotary degrees of freedom, i.e. the joystick is moved as if on a portion of the surface of a sphere, where the axis B extends out of the surface of the sphere. The primary degrees of freedom of the joystick can be linear degrees of freedom in other embodiments.

Actuator 30 is preferably coupled between the base portion 136 and the grip portion 138. With reference to the actuator 100 shown in Figure 2, the base portion 136 can be coupled to the coil head 104 while the grip portion 138 can be coupled to the housing 102. Alternatively, the position of the housing and coil portions can be reversed. The grip portion 138 thus may be moved relative to the base portion 136 due to the allowed movement of the coil head 104 with respect to the housing 102 of actuator 100. The amount of movement allowed depends on the dimensions of the actuator 100 used and any other factors such as stops provided to prohibit movement outside a particular range. Since the base portion 136 preferably cannot be moved along axis B, the base portion 136 is considered grounded with respect to the axis B. The microprocessor 26 can send signals to actuator 100 to cause force to be applied in either direction in the (non-primary) degree of freedom of axis B, which may physically move the grip portion 138 along axis B if sufficient force is output (and if an active actuator is used for actuator 100). The grip portion 138 thus may extend or compress relative to the base portion 136. Buttons and switches 140 are typically provided to allow the user to input additional signals to the microprocessor 26 and host computer 18 (wires from any buttons on handle 134 can be routed through or around the actuator 100). In other embodiments, the size of the grip portion and base portion can be altered. For example, the base portion 136 can be made longer, while the grip portion 138 can be made shorted such that the user is grasping both portions when holding the joystick handle 134 in a normal fashion.

Any number of different force sensations can be output on grip portion 138 using actuator 100. For example, a jolt sensation can be output, which is a single impulse of force that quickly rises to the desired magnitude and then is turned off or quickly decays back to zero or small magnitude. A vibration can also be output, which is a time-varying force that is typically periodic, e.g. a force vs. time waveform that is shaped like a sine wave, triangle wave, or sawtooth wave. The vibration causes the grip portion 138 to oscillate back and forth on axis B, and which can be output by the microprocessor to simulate a particular effect that is occurring in a host application. For example, the vibration can be output when a user-controlled racing car is driving on a dirt shoulder of a displayed road. A constant force can also be output on the user object. This is a force having a constant magnitude that is output for a specified period of time or until a condition occurs, such as a user-controlled cursor or graphical object being moved to a predefined location in a displayed graphical environment.

Another type of force sensation that can be output by actuator 100 is a texture force. This type of force is similar to a repeating jolt force that depends on the position of the user object in its primary (sensed) degrees of freedom. For example, a particular rectangular window area in a graphical user interface can be associated with a texture having bumps spaced at a predetermined distance apart over the area of the window. As the joystick moves a cursor over the window and over each bump, a force impulse is output. This type of force is spatially-dependent, i.e. a force is output depending on the sensed position of the joystick as it moves over a designated textured area; when the joystick is positioned between "bumps" of the texture, no force is output, and when the joystick moves over a bump, a force is output. Other spatial force sensations can also be output. In addition, any of the described force sensations herein can be output by actuator 100 simultaneously or otherwise combined as desired. Although these forces are not provided in the primary forward/back and left/right degrees of freedom of the joystick, the forces of the present invention can add to the user's haptic experience of a computer environment in a cost effective way.

The spring 120 can also be included in or in conjunction with actuator 100, for example, to bias the grip portion 138 toward an extended rest position. This spring provides a counterforce to the force applied to the grip portion by the user's hand, and allows the grip portion to be fully extended and provide for a user's grip.

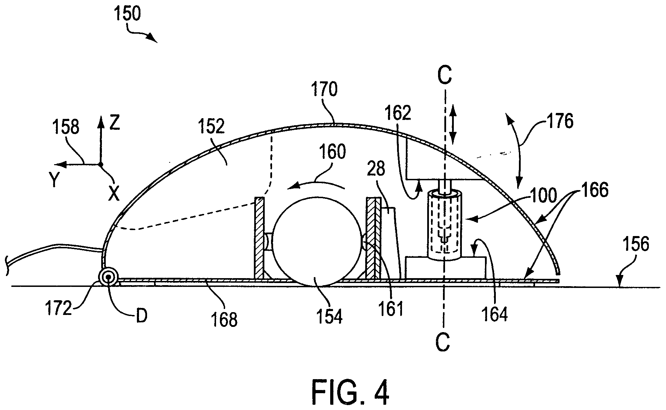

FIGURE 4 is a side elevational view of a second embodiment 150 of a force feedback device 14 of the present disclosure. Device 150 is in the form of a mouse which is normally used by users to provide planar two-dimensional input to a computer system to control a cursor in a graphical environment or alternatively to control a virtual character, vehicle, or other entity. Like most computer mice, mouse 150 includes a number of buttons 152 which are selected by the user when the user wishes to input a command gesture or the like to the computer system. Mouse 150 also includes a standard mouse ball 154 for providing directional input to the computer system. Ball 154 is a sphere that extends partially out the bottom surface of the mouse and rolls in a direction corresponding to the motion of the mouse on a planar surface 156. For example, when the mouse 150 is moved in a direction indicated by arrow 158 (y direction), the ball rotates in place in a direction shown by arrow 160. The ball motion is tracked by a cylindrical roller 161 which is coupled to a sensor 28 for detecting the motion of the mouse. A similar roller and sensor 28 is used for the x-direction which is perpendicular to the y-axis. Other types of mechanisms for detecting planar motion of the mouse 150 can be used in other embodiments; for example, a sensor can be built into the surface 156 to detect the position of an emitter or transmitter in mouse 150 and thus detect the position of the mouse 150 on the surface 156.

Mouse 150 of the present invention also preferably includes actuator 100 for providing forces in a direction along an axis C, which is approximately parallel to the z-axis. Axis C preferably extends approximately normal to the planar surface 156 so that forces are provided perpendicularly to the plane of motion of the mouse 150. Actuator 100 is preferably a linear electromagnetic actuator as described with reference to Figure 2, but can be other types of actuators in other embodiments. Actuator 100 outputs a force along axis C which causes motion in the same direction along axis C.

For the user to feel the force output by actuator 100 effectively, the mouse 150 is provided with a housing 166 that includes two portions, a base portion 168 and a cover portion 170. The base portion 168 is positioned approximately parallel to the ground surface 156 and acts as the bottom of the mouse 150. The cover portion 170 is coupled to the base portion 168 by a hinge 172, where the cover portion is not attached to the base portion at any location except for the hinge 172. Hinge 172 allows the cover portion 170 to rotate about axis D with respect to the base portion. Thus, the end 174 of the cover portion can pivot away from the base portion 168 as shown by arrow 176. Hinge 172 can be implemented in a variety of ways; for example, a cylindrical, rotatable hinge can be provided; or, a flexible material can be provided between portions 170 and 168 to allow the relative motion between the base and cover portions. Movable cover portion 170 can include the entire portion of the mouse contacted by the user in normal operation, or can be a portion of the grasped area; for example, the left and right sides of the mouse may be coupled to base portion 168 while only the top surface of the mouse is part of cover portion 170. The user's hand can grasp the sides of the mouse but a significant portion of the hand will rest on the cover portion 170 and thus feel any forces output on the cover portion 170.

Actuator 100 is positioned between two members 162 and 164 provided inside mouse 150, near the end of the mouse opposite to hinge 172. Member 162 is rigidly coupled to cover portion 170, and member 164 is rigidly coupled to base portion 168. The coil portion 104 of actuator 100 can be coupled to member 162, while the housing portion 102 of the actuator can be coupled to member 164 (these positions can be reversed in alternate embodiments). This configuration allows the actuator 100 to output a linear force that moves the member 162 and cover portion 170 relative to the member 164 and base portion 168 about axis D. The actuator can output a force in an up direction on axis C, thus causing the cover portion 170 to move away from base portion 168; or a force in a down direction can be output, forcing the two portions 170 and 168 closer together (if they are apart). The actuator 100 can be placed near the rear of the mouse 150, as shown, to cause the rear portion to move; or, the actuator 100 can be placed near the front of the mouse and the hinge 172 at the rear to cause the front end of the mouse 150 to move. In some embodiments, the actuator 100 also includes a physical spring 120 which biases the actuator to a partially- or fully-extended position and thus prevents the cover portion from resting in a "compressed" position (in those embodiments where the neutral or rest position of the cover portion is at a position some distance above the base portion). In an alternate embodiment, the actuator 30 can be a rotary actuator that outputs a rotational force (torque) on hinge 172 to cause rotary motion about axis D, thereby moving the cover portion 170 about axis D similarly to the linear actuator embodiment described above.

The force sensations which can be output using actuator 100 can take a variety of forms. As discussed with respect to Fig. 3, jolts and vibrations can be output when the microprocessor 26 or host computer 12 sends the appropriate signals to the actuator 100. The jolts and vibrations can indicate various features of the graphical environment on the host computer to the user. For example, a vibration can be output while a user-controlled cursor is positioned inside the boundary of an icon or other graphical object in a graphical user interface. The force is applied to the entire portion of the mouse grasped by the user, e.g. the entire cover portion 170. Since the entire cover portion 170 may move or be biased with the output force, rather than just a small area of the mouse's surface, the user's entire hand on mouse 150 feels the jolt, vibration, constant force, or texture.

The mouse embodiment 150 allows the user to interact with a graphical environment through the sense of feel. The output of forces can be coordinated with events occurring in the graphical environment. For example, when the user moves a cursor over a window in a graphical user interface, a jolt can be output by actuator 100 as the cursor moves over a boundary of the window. Furthermore, the magnitude of output forces can depend on the event in the graphical environment. For example, the force jolt can be a different magnitude of force depending on the type of graphical object encountered by the cursor. For example, a jolts of higher magnitude can be output when the cursor moves over windows, while jolts of lower magnitude can be output when the cursor moves over icons. The magnitude of the jolts can also depend on other characteristics of graphical objects, such as an active window as distinguished a background window, file folder icons of different priorities designated by the user, icons for games as distinguished from icons for business applications, different menu items in a drop-down menu, etc. In games or simulations, the magnitude of jolts can be based on the severity of a collision or explosion, the size of the controlled graphical object or entity (and/or the size of a different graphical object/entity that is interacted with), the velocity or acceleration of the user object, etc. Similarly, different-magnitude vibrations can be output depending on the type of graphical object the cursor is moved over or depending on other characteristics of graphical objects. Different-magnitude constant forces can also be output depending on such characteristics. Finally, different magnitudes of textures and/or different spacings between the bumps of textures can be output depending on different characteristics of objects and entities encountered in the graphical environment. Different magnitudes of other force sensations can be similarly used. The above-described differences in force sensations can be applied to all the embodiments disclosed herein.

The mouse embodiment 150 also allows the user to feel a simulated 3-D surface while moving the mouse in its planar workspace. For example, the user can be moving the mouse 150 on surface 156 to move a cursor or other user-controlled graphical object over a spatial "landscape" that is represented by an overhead view of the landscape on display screen 20. For example, a contour map can be displayed on the display device 20. As the cursor moves over a hill of the displayed landscape, the actuator 100 is controlled to output a force that moves the end of the mouse 150 about axis D (or along axis C) by a specified distance that approximately corresponds to the height of the hill (or outputs a force having a magnitude proportional to the height of the hill). When the cursor is moved over an area that is at a lower elevation, the actuator 100 is controlled to move the cover portion 170 of the mouse 150 down to a lower level. In this way, the user can both perceive elevation changes visually by the use of contour lines, and can experience the elevation changes through the sense of feel by the distance that cover portion 170 is moved in the non-primary degree of freedom. For visual maps that do not make elevation changes obvious, the forces output by actuator 100 can provide information to the user that is not easily available through other senses. The use of actuator 100 for providing motion in the non-primary degree of freedom for a simulated 3-D surface can also be used in connection with other applications, such as a CAD 3-D drawing, a game, or even to indicate information in a word processor or spreadsheet.

FIGURE 5 is a perspective view of a third embodiment 200 of a force feedback device 14 of the present disclosure. Device 200 includes a base 202 and a rotatable wheel 204 coupled to the base 202. Wheel device 200 is typically used in conjunction with graphical racing games or other games in which a vehicle is controlled by the player. Any portion of the rim of wheel 204 is typically grasped by the hands of the user to turn the wheel during such games. Sensor 28 is provided in base 202 to detect the rotational position or motion of wheel 204. In the described embodiment, actuator 30 (shown as actuator 100) is provided between the wheel shaft 206 and the base 202. For example, the shaft 206 coupled to wheel 204 can be coupled to the housing 102, while the base shaft 208 that is coupled to base 202 and sensor 28 is coupled to the coil head 104 of the actuator 100. Actuator 100 can output linear forces along axis E, which extends through the center of rotation of the wheel 204, approximately perpendicular to the plane of rotation of the wheel.

Actuator 100 provides force sensations to the user grasping wheel 204 similarly to the sensations described above with respect to the embodiments of Figs. 3 and 4. For example, vibration or jolt forces can be output in the non-primary degree of freedom along axis E when the user is controlling a vehicle on a simulated bumpy road. Texture forces can be output along axis E, dependent on a simulated velocity and trajectory of a controlled vehicle. A spring 120 can be provided in the actuator 100 to bias the wheel 204 to a resting position, similarly to the joystick of Fig. 3. As described above, if actuator 100 is the only actuator used in device 200 and no forces are output in the rotary degree of freedom of the wheel 204 about axis E, the cost of the device can be significantly reduced.

FIGURE 6 is a side elevational view of a stylus embodiment 220 of the force feedback device of the present invention. The stylus 220 can be used as a pointing device to input coordinates to host computer 18. For example, the stylus 220 can be used in conjunction with a tablet that detects the point of contact between the stylus and the tablet or the position of the stylus over the tablet. The coordinates of the point of contact can be provided to the host computer to control a graphical "pen" in a drawing program or to control a cursor, as is well known to those skilled in the art. Other stylus embodiments may use a sensor in the stylus for providing coordinates in some defined reference plane or volume, and thus no tablet may be required. Several embodiments of stylus devices are well known to those skilled in the art and can be used in the present invention. Preferably, the stylus for use with the present invention does not have a mechanical linkage coupled to it to sense its motion, although such a linkage can be used in alternate embodiments.

Stylus 220 includes a body portion 222 and a tip portion 224. The user may grasp the body portion 222 and write or point with the stylus like a normal pen-like instrument. Alternatively, the user can grip the stylus 220 at the tip portion 224 and/or at actuator 100. Actuator 30 (shown as actuator 100) couples the tip portion 224 with the body portion 222. As shown, the body portion 222 is coupled to the coil head 104 of the actuator 100, while the tip portion is coupled to the housing 102. These positions can be reversed in alternate embodiments. The body and tip portions thus may extend relative to each other, and the actuator 100 can output force along the lengthwise axis F which extends along the length of the stylus 220. The actuator 100 may also include spring 120 to bias the tip and body portions to an extended neutral position. In one embodiment, the force sensations output by actuator 100 can be made sufficiently low in magnitude to allow the power source for the actuators to be placed inside the stylus 220. For example, batteries can be provided to source power for actuator 100. Alternatively, a cord 226 or other transmission device can be used to supply power to actuator 100 from a separate power supply.

The actuator 100 can be controlled to output the various force sensations described above when the user is using the stylus. For example, vibrations, jolts, constant forces, or textures can be output when the user moves the stylus tip over areas corresponding to particular regions in a graphical user interface or other graphical environment. A 3-D landscape similar to that described above for the mouse embodiment 150 can also be used with stylus 220, where areas of higher elevation can correspond with the actuator 100 moving the body portion 222 away from the tip portion 224 for a distance corresponding to the amount of elevation.

FIGURE 7 is a side elevational view of an embodiment 240 of the stylus 220 of Fig. 6. The embodiment 240 includes a standard body portion 241 and a different stylus tip 242 which includes a rotatable ball 244, e.g. similar to a ball used in a standard ball-point pen. The ball 244 is positioned between two supports 246 which hold the ball in place but allow the ball to rotate while maintaining a constant spatial position. Next to the ball 244 is actuator 100, which is coupled to the stylus 240. In the embodiment shown, the coil head 104 is coupled to the stylus 240 while the housing 102 is coupled only to the coil head 104. A brake pad 248 is also coupled to the housing 102 of the actuator.

When the user wishes to use the stylus normally, the user moves the tip of the pen across a surface. Since the ball 244 is the only portion of the tip contacting the surface in typical operation, this motion causes the ball 244 to roll to allow a fluid motion of the stylus over the surface. The contact of the ball with a tablet surface can be sensed by a sensor in the tablet, for example. When a force sensation is to be output, the actuator 100 is controlled to extend, i.e. the housing 102 and brake pad 248 are commanded to move and contact the ball 244. This causes a resistance to the motion of the ball and can cause the ball to stop rolling. If the actuator 100 is commanded to quickly move the brake pad 248 against the ball 244 with maximum force, a jolt-like effect is felt by the user. If the brake pad is more gradually contacted with the ball, the user may feel an increasing resistance or damping-like effect. If the actuator is commanded to pulse so that the brake pad 248 continuously is contacted with the ball 244 and then withdrawn at a high frequency, a vibration-like effect is felt by the user. In some embodiments, a solenoid is a suitable low cost embodiment for actuator 100 in the embodiment 240 since the solenoid can be readily adapted to move the pad 248 against the ball 244.

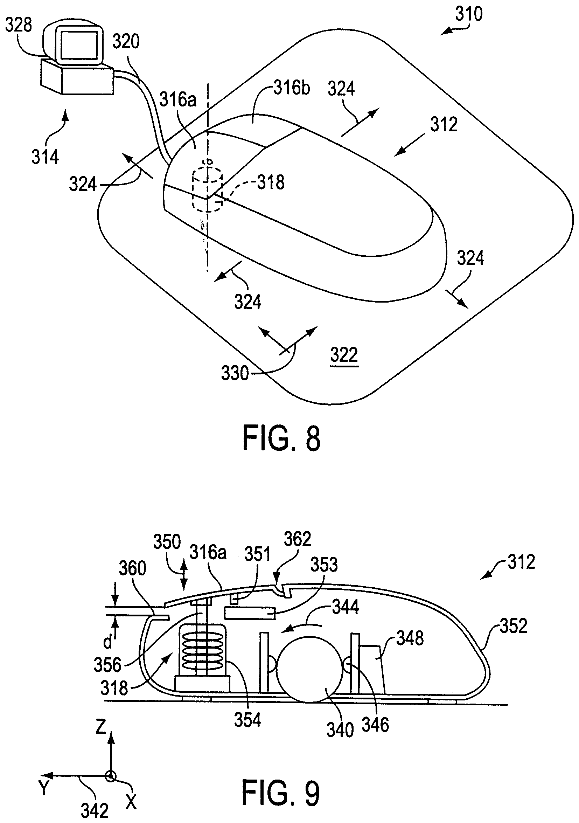

FIGURE 8 is a perspective view of one embodiment of a different aspect of the present disclosure providing force feedback in the degree of motion of a button or command gesture. Force feedback mouse interface system 310 of the present invention is capable of providing input to a host computer based on the user's manipulation of the mouse and capable of providing force feedback to the user of the mouse system based on events occurring in a program implemented by the host computer. Mouse system 310 includes a mouse 312 and a host computer 314. It should be noted that the term "mouse" as used herein, indicates an object generally shaped to be grasped or contacted from above and moved within a substantially planar workspace (and additional degrees of freedom if available). Typically, a mouse is a smooth or angular shaped compact unit that snugly fits under a user's hand, fingers, and/or palm, but can be implemented as a grip, finger cradle, cylinder, sphere, planar object, etc.

Mouse 312 is an object that is preferably grasped or gripped and manipulated by a user. By "grasp," it is meant that users may releasably engage a portion of the object in some fashion, such as by hand, with their fingertips, etc. The user may move it in the provided degrees of freedom in physical space. For example, a user can move mouse 312 to provide planar two-dimensional input to a computer system to correspondingly move a computer generated graphical object, such as a cursor or other image, in a graphical environment provided by computer 314 or to control a virtual character, vehicle, or other entity in a game or simulation. In addition, mouse 312 preferably includes one or more buttons 316a and 316b to allow the user to provide additional commands to the computer system. The mouse 312 may also include additional buttons. For example, a thumb button can be included on one side of the housing of mouse 312.

Mouse 312 preferably includes an actuator 318 which is operative to produce forces on one or more buttons of the mouse 312. This operation is described in greater detail below with reference to Fig. 9.

Mouse 312 rests on a ground surface 322 such as a tabletop or mousepad. A user grasps the mouse 312 and moves the mouse in a planar workspace on the surface 322 as indicated by arrows 324. Mouse 312 may be moved anywhere on the ground surface 322, picked up and placed in a different location, etc. A frictional ball and roller assembly (not shown) is provided on the underside of the mouse 312 to translate the motion of the mouse 312 into electrical position signals, which are sent to a host computer 314 over a bus 320 as is well known to those skilled in the art. In other embodiments, different mechanisms can be used to convert mouse motion to position or motion signals received by the host computer.

Mouse 312 is coupled to the computer 314 by a bus 320, which communicates signals between mouse 312 and computer 314 and may also, in some preferred embodiments, provide power to the mouse 312. Components such as actuator 318 require power that can be supplied from a conventional serial port or through an interface such as a USB or Firewire bus. In other embodiments, signals can be sent between mouse 312 and computer 314 by wireless transmission/reception.

Host computer 314 is preferably a personal computer or workstation, or can be one of a variety of home video game systems commonly connected to a television set, such as systems available from Nintendo, Sega, or Sony, a "set top box," a "network-" or "internet-computer" which allows users to interact with a local or global network using standard connections and protocols such as used for the Internet and World Wide Web. Host computer 314 is similar to the host computer described with reference to Fig. 1. Host computer 314 preferably implements a host application program with which a user is interacting via mouse 312 and other peripherals, if appropriate, and which may include force feedback functionality, as described above. In one preferred embodiment, an application program utilizes a graphical user interface (GUI) to present options to a user and receive input from the user.

Display device 326 can be included in host computer 314 and can be a standard display screen (LCD, CRT, flat panel, etc.), 3-D goggles, or any other visual output device. Typically, the host application provides images to be displayed on display device 326 and/or other feedback, such as auditory signals. For example, display screen 326 can display images from a GUI.

As shown in Figure 8, the host computer may have its own "host frame" 328 which is displayed on the display screen 326. In contrast, the mouse 312 has its own workspace or "local frame" 330 in which the mouse 312 is moved. In a position control paradigm, the position (or change in position) of a user-controlled graphical object, such as a cursor, in host frame 328 corresponds to a position (or change in position) of the mouse 312 in the local frame 330. The offset between the object in the host frame and the object in the local frame can be changed by the user by indexing, i.e., moving the mouse while no change in input is provided to the host computer, such as by lifting the mouse from a surface and placing it down at a different location.

In alternative embodiments, the force feedback provided to button 316a can be applied to buttons of other interface and control devices. For example, buttons of a hand-held remote control device used to select functions of a television, video cassette recorder, sound stereo, internet or network computer (e.g., Web-TV™), a gamepad controller for console video game systems, etc.

FIGURE 9 is a side cross-sectional view of the mouse 312 of Fig. 8. In a preferred embodiment, mouse 312 includes a standard mouse ball 340 for providing directional input to the computer system. Ball 340 is a sphere that extends partially out the bottom surface of the mouse and rolls in a direction corresponding to the motion of the mouse on a planar surface 322. For example, when the mouse 312 is moved in a direction indicated by arrow 342 (y direction), the ball rotates in place in a direction shown by arrow 344. The ball motion is tracked by a cylindrical roller 346 which is coupled to a sensor 348 for detecting the motion of the mouse. A similar roller and sensor 328 is used for the x-direction which is perpendicular to the y-axis. Other types of mechanisms for detecting planar motion of the mouse 312 can be used in other embodiments; for example, an optical sensor can be built into the surface 322 to detect the position of an emitter or transmitter in mouse 312 and thus detect the position of the mouse 312 on the surface 322.

Buttons 316a and/or 316b are selected by the user as a "command gesture" when the user wishes to input a command signal to the host computer 314. The user pushes the button 316a down (in the degree of freedom of the button approximately along axis z) toward the actuator 318 to provide a command to the computer. The command signal, when received by the host computer, can manipulate the graphical environment in a variety of ways. For example, a graphical object positioned under the cursor such as an icon, button, slider thumb, menu item, or web link can be selected using the command gesture. Application programs can be executed or an action can be initiated in a game or simulation using the command gesture.

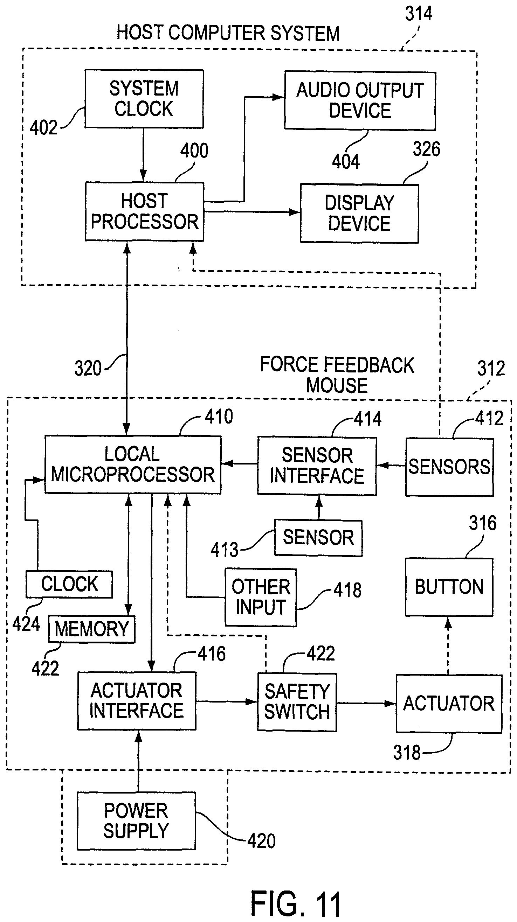

In one embodiment, an electrical lead 351 can be made to contact a sensing lead 353 as with any mechanical switch to determine a simple on or off state of the button. An optical switch or other type of digital sensor can alternatively be provided to detect a button press. In a different continuous-range button embodiment, a sensor can be used to detect the precise position of the button 316a in its range of motion (degree of freedom). For example, each position of the button can be sensed as a different analog value and used as an analog value or a digital value in processing the button position. This allows the host computer 314 (or local microprocessor) to determine the position of the button and to control a force output based on that position, as described in greater detail with respect to Fig. 11.

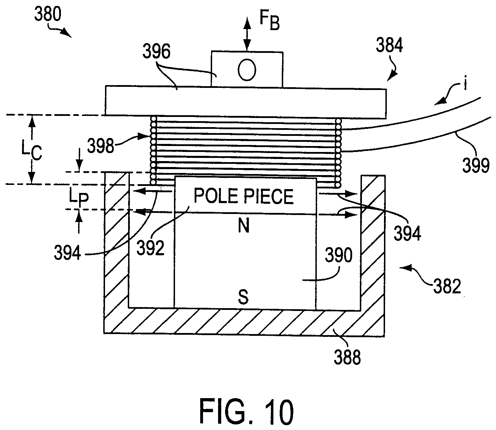

In the present invention, button 316a is actuated using actuator 318 for providing forces in a direction shown by arrow 350, which is approximately perpendicular to the plane of motion of the mouse 312, i.e. in the degree of freedom of button 316. Actuator 318 is preferably a linear electromagnetic actuator as described with reference to Fig. 10, but can be other types of actuators in other embodiments. Actuator 318 includes a stationary portion 354, such as a magnet, and a linearly-moving portion 356, such as a coil. In other embodiments, the stationary portion can be the coil and the moving portion can be the magnet. The stationary portion 354 is coupled to the housing 352 of the mouse 312, and the moving portion 356 is coupled to the button 316a to output force on the button 316a.

The actuator 318 can output a linear force that moves the button 316a up or down on the z-axis as shown by arrow 350. The button 316a can be pivotable at a hinge 362 which can be implemented in a variety of ways. For example, a flexible plastic between button 316a and housing 352 can act as a hinge, or a mechanical rotatable hinge can be used. The button 316a preferably has a limit to motion down provided by a stop 360, which can be part of or coupled to the housing 352. The button 316a can thus move a distance d from a rest position to the lowest position before the stop prevents further movement. In some embodiments, the button 316a can also have a stop limiting upward travel away from the housing 352 to a desired distance. A mechanical spring can also be included for button 316a, for example, to bias the button toward its rest position (if the hinge 362 does not perform that function). Alternatively, a repulsive magnet pair can be used to perform the same function as the mechanical spring.

Button 316b (see Fig. 8) can also (or alternatively) be provided with forces in other embodiments. For example, a single actuator 318 can provide forces simultaneously to both buttons 316a and 316b by coupling the moving portion 356 to both buttons. Alternatively, each button 316 can be provided with its own actuator, so that two actuators 318 are included in mouse 312. Furthermore, additional buttons can be included and can be similarly provided with forces, such as a third button between buttons 316a and 316b, a thumb wheel having button capability, and/or one or more thumb buttons provided on the side of the housing 352 of the mouse 312. In some embodiments, the actuator 318 also includes a physical spring which biases the button 316a to a position different than rest position shown in Fig. 9. In an alternate embodiment, the actuator 318 can be a rotary actuator that outputs a rotational force (torque) on hinge 362 to apply force on the button in a rotary degree of freedom (which may appear to the user to be a linear degree of freedom due to the small range of motion of the button 316a).

In other embodiments, the button force feedback as described above can be combined with an embodiment that provides an actuator to apply force to a portion of the housing 352, such as a pivotable top portion of the housing.

FIGURE 10 is a schematic view of a one embodiment 380 of actuator 318 suitable for use with the present invention. Actuator 380 is a voice coil actuator that includes a magnet portion 382 (which is the stationary portion 354) and a bobbin 384 (which is the moving portion 356). The magnet portion 382 is grounded and the bobbin 384 is moved relative to the magnet portion. In other embodiments, the bobbin 384 can be grounded and the magnet portion 382 can be moved. Magnet portion 382 includes a housing 388 made of a metal such as steel. A magnet 390 is provided within the housing 388 and a pole piece 392 is positioned on magnet 390. Magnet 390 provides a magnetic field 394 that uses steel housing 388 as a flux return path. Pole piece 392 focuses the flux into the gap between pole piece 392 and housing 388. The length of the pole piece 392 is designated as L_{P} as shown. The housing 388, magnet portion 382, and bobbin 384 are preferably cylindrically shaped, but can also be provided as other shapes in other embodiments.

Bobbin 384 is operative to move linearly with respect to magnet portion 388. Bobbin 384 includes a support member 396 and a coil 398 attached to the support member 396. The coil is preferably wound about the support member 396 in successive loops. The mouse button 316a is coupled to the support member 396. The length of the coil is designated as L_{C} in Fig. 10. When the bobbin is moved, the coil 398 is moved through the magnetic field 394. An electric current I is flowed through the coil 398 via electrical connections 399. As is well known to those skilled in the art, the electric current in the coil generates a magnetic field. The magnetic field from the coil then interacts with the magnetic field 394 generated by magnet 390 to produce a force. The magnitude or strength of the force is dependent on the magnitude of the current that is applied to the coil and the strength of the magnetic field. Likewise, the direction of the force depends on the direction of the current in the coil. The operation and implementation of force using magnetic fields is well known to those skilled in the art.

The length of coil L_{C} and length of pole piece L_{P} can be adjusted to suit a particular application. For example, to provide a long stroke of bobbin 396 and an approximately constant force to be output over the linear range of motion of the bobbin, the length of coil L_{C} is greater than the length of the pole piece L_{P}, such as two to three times greater. However, in most embodiments, only a short stroke of bobbin 396 is required, and the coil length L_{C} can be made close to or the same as the length of the pole piece L_{P}.

Actuator 380 is a low cost, low power component that is well suited to the low cost embodiment of the present invention. Actuator 380 has a high bandwidth and a small range of motion as required by the present invention. In other embodiments, different types of actuators can be used. For example, linear voice magnet, linear solenoid, DC current controlled linear motor, a linear stepper motor controlled with pulse width modulation of an applied voltage, a pneumatic/hydraulic actuator, a torquer (motor with limited angular range), etc. Also, passive actuators can be used, such as magnetic particle brakes or fluid-controlled passive actuators. In yet other embodiments, a rotary actuator can be used to output a torque in a rotary degree of freedom on a shaft, which is converted to linear force and motion through a transmission, as is well known to those skilled in the art.

FIGURE 11 is a block diagram illustrating one embodiment of the force feedback system including a local microprocessor and a host computer system. Host computer system 314, display screen 326, audio output device 304, bi-directional bus 320, power supply 420, local microprocessor 410 or other control hardware, local memory 422, local clock 424 are preferably similar to like components as described above for Fig. 1. Alternatively, the computer 314 can directly send force feedback signals to the mouse 312 to generate forces on button 316.

Sensors 412 and sensor interface 414 sense the position or motion of the mouse in its planar degrees of freedom and provides signals to microprocessor 410 (or host 314) including information representative of the position or motion, and are preferably similar to those described above.

Sensor 413 is used to detect the position of the button 316a. As explained above, sensor 413 can be a simple on/off detection switch to determine if the button has been pressed or not. Alternatively, a more sophisticated sensor, such as an analog potentiometer or optical encoder, can be used to determine the position of the button in its degree of freedom. Sensor 413 can alternatively be a force sensing switch to detect the amount of force applied to button 16a. Button 316b and/or any other buttons and controls can include sensors similar to sensor 413.

Actuator 318 transmits forces to one or more buttons 316 of the mouse as described above with reference to Fig. 9 in response to signals received from microprocessor 410 or host computer 314. Actuator 318 is provided to generate force approximately perpendicular to the planar degrees of freedom of motion of the mouse and thus the actuator 318 does not generate force in the primary degrees of freedom of motion of the mouse; actuator instead provides "informative" or "effect" forces that do not resist or assist motion. The sensors 412 detect the position/motion of the mouse 312 in its planar degrees of freedom, and this sensing is in no way affected by the output of forces by actuator 318. Alternate embodiments can employ additional actuators for providing forces in the planar degrees of freedom of the mouse 312. Actuator interface 416 can be optionally connected between actuator 318 and microprocessor 410 to convert signals from microprocessor 410 into signals appropriate to drive actuator 318. Interface 338 can include power amplifiers, switches, digital to analog controllers (DACs), analog to digital controllers (ADCs), and other components, as is well known to those skilled in the art.

Other input devices 418 are included in mouse 312 and send input signals to microprocessor 410 or to host 314 when manipulated by the user. Such input devices include buttons 316 and can include additional buttons, dials, switches, scroll wheels, or other controls or mechanisms.

A safety switch 422 can optionally be included to allow a user to deactivate actuator 318 for safety reasons. For example, the user must continually activate or close safety switch 432 during operation of mouse 312 to enable the actuator 318. If, at any time, the safety switch is deactivated (opened), power from power supply 420 is cut to actuator 318 (or the actuator is otherwise disabled) as long as the safety switch is opened. Embodiments include an optical switch, an electrostatic contact switch, a button or trigger, a hand weight safety switch, etc.

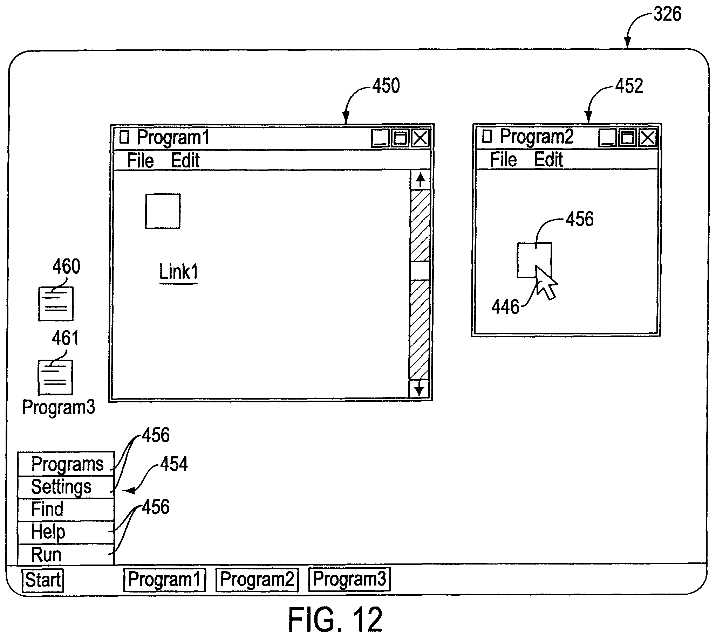

FIGURE 12 is a diagram of display screen 326 of host computer 314 showing a graphical user interface. The force feedback mouse of the present invention can provide force sensations that make interaction with the graphical objects more compelling and more intuitive. The user typically controls a cursor 446 to select and manipulate graphical objects and information in the graphical user interface. The cursor is moved according to a position control paradigm, where the position of the cursor corresponds to a position of the mouse in its planar workspace. Force sensations can be output using actuator 318 based on signals output from the local microprocessor or host computer.

For example, a jolt sensation can be output, which is a single impulse of force that quickly rises to the desired magnitude and then is turned off or quickly decays back to zero or small magnitude. A vibration can also be output, which is a time-varying force that is typically periodic, e.g. a force vs. time waveform that is shaped like a sine wave, triangle wave, or sawtooth wave. The vibration causes the button 316a to oscillate back and forth on the Z axis, and can be output by the microprocessor to simulate a particular effect that is occurring in a host application. A constant force can also be output on the user object. This is a force having a constant magnitude that is output for a specified period of time or until a condition occurs, such as a user-controlled cursor or graphical object being moved to a predefined location in a displayed graphical environment.

Another type of force sensation that can be output by actuator 318 is a texture force. This type of force is similar to a repeating jolt force, but depends on the position of the mouse in its planar workspace (or on the position of the cursor in the graphical user interface). Thus, texture bumps are output depending on whether the cursor has moved over the location of a bump in a graphical object. This type of force is spatially-dependent, i.e. a force is output depending on the sensed position of the mouse as it moves over a designated textured area; when the mouse is positioned between "bumps" of the texture, no force is output, and when the mouse moves over a bump, a force is output. Other spatial force sensations can also be output. In addition, any of the described force sensations herein can be output by actuator 318 simultaneously or otherwise combined as desired.

Windows 450 and 452 display information from application programs running on the host computer 314. Force sensations can output on the button 316a based on interaction between cursor 446 and a window. For example, a z-axis "bump" or jolt can be output on the button 316a when the cursor is moved over a border of a window 450 or 452 to signal the user of the location of the cursor. When the cursor 146 is moved within the window's borders, a texture force sensation can be output. The texture can be a series of bumps that are spatially arranged within the area of the window in a predefined pattern; when the cursor moves over a designated bump area, a bump force is output on the button 316a. A jolt or bump force can be output when the cursor is moved over a selectable object, such as a link 454 in a displayed web page or an icon 456. A vibration can also be output to signify a graphical object which the cursor is currently positioned over. Furthermore, features of a document displaying in window 450 or 452 can also be associated with force sensations. For example, a jolt can be output on button 316a when a page break in a document is scrolled past a particular area of the window. Page breaks or line breaks in a document can similarly be associated with force sensations such as jolts.

Menu 454 can be selected by the user after a menu heading or button such as start button 456 is selected. The individual menu items 456 in the menu can be associated with forces. For example, bumps can be output when the cursor is moved over the border between menu items 456. Icons 460 and 461 can be associated with textures, jolts, and vibrations similarly to the windows described above. Drawing or CAD programs also have many features which can be associated with force sensations, such as displayed (or invisible) grid lines or dots, control points of a drawn object, etc.

Another type of force sensation is a spring force provided by the actuator 318 rather than (or in addition to) force provided by a mechanical spring. The magnitude of this force sensation is dependent on the distance of the button from the origin of the spring. Thus, a more sophisticated sensor 413 is preferably used to sense the position of the button 316a in its degree of freedom. If the origin of the spring is at the rest position of the button, then the further the button is moved from the rest position, the greater the spring force opposing that motion. This force sensation can be associated with graphical objects and can be differentiated using magnitude. For example, when the user positions the cursor 446 over an icon 456 and presses the button, a light spring force resists the pressed motion of the button. When the user positions the cursor 446 over a different graphical object, such as icon 460, a heavy spring force is output having a greater magnitude than the spring force for icon 456.

Similar to the spring force, a "well" sensation can be output. When the cursor is positioned over a selectable graphical object, the button 316a can be mode to dip or move downward a slight amount as if the cursor were then at a lower elevation. This sensation can be used to indicate the status of a graphical object or to differentiate different graphical objects having different well "depths". In other embodiments having a button with a relatively large range of movement, a simulated 3-D surface can be simulated, where the button is moved to different elevations in correspondence with simulated elevations of graphical objects, displayed terrain features, etc.

Furthermore, the magnitude of output forces can depend on the event or interaction in the graphical environment. For example, the force jolt can be a different magnitude of force depending on the type of graphical object encountered by the cursor. For example, a jolts of higher magnitude can be output when the cursor moves over windows, while jolts of lower magnitude can be output when the cursor moves over icons. The magnitude of the jolts can also depend on other characteristics of graphical objects, such as an active window as distinguished a background window, file folder icons of different priorities designated by the user, icons for games as distinguished from icons for business applications, different menu items in a drop-down menu, etc.

User-independent events can also be relayed to the user using force sensations. An event occurring within the graphical user interface, such as an appointment reminder, receipt of email, etc., can be signified using a vibration, jolt, or other time-based force. The force sensation can be varied to signify different events of the same type. For example, vibrations of different frequency can each be used to differentiate different events or different characteristics of events, such as particular users sending email, the priority of an event, or the initiation or conclusion of particular tasks (e.g. the downloading of a document or data over a network).

The above-described force sensations can also be used in games or simulations where the mouse 312 is used as the primary input device. For example, a vibration can be output when a user-controlled racing car is driving on a dirt shoulder of a displayed road, and a jolt can be output when the car collides with another object. The magnitude of jolts can be based on the severity of a collision or explosion, the size of the controlled graphical object or entity (and/or the size of a different graphical object/entity that is interacted with), the velocity or acceleration of the mouse 312, etc. Force sensations can also be output based on user-independent events in the game or simulation, such as jolts when bullets are fired at the user's character.

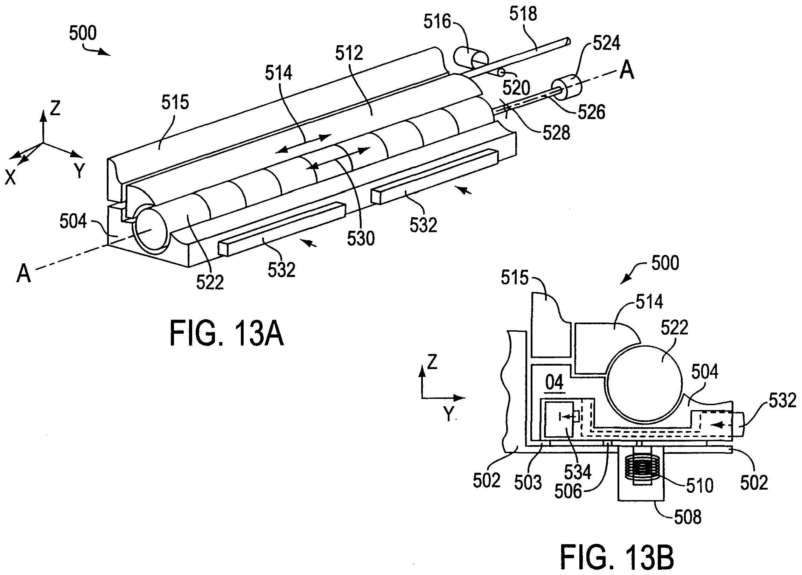

FIGURES 13a and 13b are perspective and side views, respectively, of another embodiment 500 of the force feedback pointing device. In this embodiment, a cylinder controller is provided for a user to control a cursor or other graphical object or entity displayed on a computer screen. Controller 500 is preferably coupled to a host computer 314 as shown in Fig. 8 by a interface bus similar to bus 320 described above. Controller 500 can be mounted on a grounded surface or base 502, which can be a keyboard housing allowing easy access to the controller when operating the keyboard. Or the surface can be a different base separate from the keyboard.

A switchbar 504 is flexibly coupled to the base 502 at a leg 503 so as to allow the switchbar to flex downward toward the base 502. A contact switch 506 is provided on the base 502 and detects when the switchbar 504 is pressed downward by the user. Switch 506 can be any type of sensor as described for sensor 413 above. In addition, an actuator 508 is provided having a grounded portion 510 coupled to the base 502 (or ground) and a moving portion 512 coupled to the switchbar 504. Actuator 508 is similar to actuator 318 described above, and can output forces on the switchbar in the degree of freedom along the Z axis, similar to the mouse button 316. A local microprocessor 410 and the other components of Fig. 11 may also be included for embodiment 200.

A bar 512 is slidably coupled to the base 502 and may translate left and right along the x-axis as shown by arrow 514. The movement of bar 512 may be detected using a grounded sensor 516 which detects the motion of a member 518 that is rigidly coupled to the bar 514 and which is frictionally engaged with a rotating wheel 520 coupled to the sensor shaft. Barrier bar 515 is provided as a stationary surface with respect to the base 502. A cylinder 522 is rotatably coupled between the base 502 and the switchbar 502, and is preferably journalled in a U-shaped groove in the switchbar 502. Cylinder 522 may rotate about axis A as shown by arrow 528 and may also translate along axis A parallel to the x-axis as shown by arrow 530. The rotation of cylinder 522 can be detected by a sensor 524 that is connected to the cylinder 522 by a shaft 526. The cylinder 522 can be provided with a member and sensor (not shown) similar to sensor 516 and member 518 to measure translatory movement of the cylinder shown by arrow 530.

Controller 500 is preferably used as a pointing device to control the position of a cursor or other graphical object on a display device. In a preferred embodiment, the rotation of cylinder 522 causes a user-controlled cursor displayed by the computer 314 to be moved vertically in the host frame (on the computer screen), while translation of bar 514 or cylinder 522 causes the cursor to be moved horizontally in the host frame. Preferably, bar 514 can be translated independently of cylinder 522 to allow horizontal motion of the cursor without undesired vertical motion.

Furthermore, the base 502 is preferably pressed downward by the user as a command gesture to send a command signal to the computer with similar effect as if a mouse button had been pressed as described above. Thus, if the user presses on base 502 directly, or presses on bar 514, barrier bar 515, or cylinder 522 to indirectly cause the base 502 to activate switch 506, then a signal is sent to the host computer or local microprocessor. Buttons 532 can also be pressed by the user as second and third buttons to provide additional input signals to the host computer, as detected by switch 534. These buttons can be provided with force feedback, if desired, using an actuator similar to actuator 508, for example.

Using the actuator 18, forces can be output on base 502, cylinder 522, and bar 514 similar to the forces output on mouse button 16a as described with respect to Fig. 12. This allows bumps, jolts, textures, and other force sensations to enhance the user's interaction with graphical objects in a graphical user interface, game, or simulation while using the controller 500 at a low cost and complexity. In alternate embodiments, force feedback can also be added to one or more of the other degrees of freedom for the control of the cursor as shown by arrows 514, 528, and 530.

While this invention has been described in terms of several preferred embodiments, it is contemplated that alterations, permutations and equivalents thereof will become apparent to those skilled in the art upon a reading of the specification and study of the drawings. For example, many different types of force sensations can be provided with the actuator of the present invention.

## Claims

1. An apparatus comprising:
a stylus (34, 220) configured to be manipulated against a surface and configured to be held in a hand of a user (22): the stylus comprising a tip (224, 242) operative in use to contact the surface;
a sensor (28) configured to send at least one sensor signal to a host computer (12) based on a coordinate position of the stylus only when the stylus is moved against the surface; and,
an actuator (30, 100) disposed within the stylus, wherein the actuator is
configured to apply a haptic sensation in response to the at least one sensor signal indicating the stylus at a designated coordinate position on the surface;
**characterised in that**:
the actuator applies the haptic sensation while the stylus is in contact with the surface.

2. The apparatus of claim 1, wherein the actuator is configured to modify the length of the stylus.

3. The apparatus of claim 1, further comprising a power source disposed within the stylus.

4. The apparatus of claim 1, wherein the power source includes a battery.

5. The apparatus of claim 1, wherein the actuator is configured to produce at least one of a plurality of force sensations, the plurality of force sensations including a vibration, a jolt, a texture, and a constant force.

6. The apparatus of claim 1, wherein the actuator includes a voice coil.

7. The apparatus of claim 1, wherein a tip portion of the stylus member includes a rotatable ball (244).

8. The apparatus of claim 7, wherein the actuator is configured to apply resistance against the rotatable ball.

9. The apparatus of claim 1, wherein the actuator is a solenoid.

10. The apparatus of claim 1, wherein the actuator is configured to vibrate.

11. The apparatus of claim 1, wherein the sensor is disposed within the surface.

12. A method for applying a haptic effect to a stylus (30, 220), the stylus comprising a tip (224, 242) operative in use to contact the surface; the method comprising the steps of:
sensing a coordinate position of a stylus against a surface to produce a sensed signal;
sending a coordinate position signal to a host computer (12) only when the stylus is moved along the surface, the coordinate position signal associated with the sensed signal and indicating the coordinate position of the stylus along the surface; and,
applying a haptic sensation in response to the coordinate position signal indicating the stylus being at a designated coordinate position on the surface;
**characterised by** the step of:
the actuator applying the haptic sensation while the stylus remains in contact with the surface.

13. The method of claim 12, wherein the stylus (220) includes a rotatable ball (244) in a tip portion (242), the actuator (100) being configured to apply the force to the rotatable ball.

## Patentansprüche

1. Vorrichtung, Folgendes umfassend:
einen Eingabestift (34, 220), konfiguriert, gegen eine Oberfläche betätigt zu werden, und konfiguriert, in einer Hand eines Benutzers (22) gehalten zu werden: wobei der Eingabestift eine Spitze (224, 242) umfasst, die im Einsatz betriebsfähig ist, die Oberfläche zu berühren;
einen Sensor (28), konfiguriert, auf der Grundlage einer Koordinatenposition des Eingabestifts nur dann, wenn der Eingabestift gegen die Oberfläche bewegt wird, wenigstens ein Sensorsignal an einen Hostcomputer (12) zu senden; und
einen im Eingabestift angeordneten Aktor (30, 100), wobei der Aktor konfiguriert ist, eine haptische Empfindung als Reaktion darauf, dass das wenigstens eine Sensorsignal anzeigt, dass sich der Eingabestift an einer bestimmten Koordinatenposition auf der Oberfläche befindet, aufzubringen;
**dadurch gekennzeichnet, dass**:
der Aktor die haptische Empfindung aufbringt, während der Eingabestift in Berührung mit der Oberfläche ist.

2. Vorrichtung nach Anspruch 1, wobei der Aktor konfiguriert ist, die Länge des Eingabestifts zu modifizieren.

3. Vorrichtung nach Anspruch 1, ferner umfassend eine in dem Eingabestift angeordnete Stromquelle.

4. Vorrichtung nach Anspruch 1, wobei die Stromquelle eine Batterie enthält.

5. Vorrichtung nach Anspruch 1, wobei der Aktor konfiguriert ist, wenigstens eine von mehreren Kraftempfindungen zu erzeugen, wobei die mehreren Kraftempfindungen eine Vibration, einen Ruck, eine Oberflächenstruktur und eine konstante Kraft enthalten.

6. Vorrichtung nach Anspruch 1, wobei der Aktor eine Schwingspule enthält.

7. Vorrichtung nach Anspruch 1, wobei ein Spitzenabschnitt des Eingabestiftelements eine drehbare Kugel (244) enthält.

8. Vorrichtung nach Anspruch 7, wobei der Aktor konfiguriert ist, Widerstand gegen die drehbare Kugel aufzubringen.

9. Vorrichtung nach Anspruch 1, wobei der Aktor eine Magnetspule ist.

10. Vorrichtung nach Anspruch 1, wobei der Aktor konfiguriert ist, zu vibrieren.

11. Vorrichtung nach Anspruch 1, wobei der Sensor innerhalb der Oberfläche angeordnet ist.

12. Verfahren zum Aufbringen einer haptischen Wirkung auf einen Eingabestift (30, 220), wobei der Eingabestift eine Spitze (224, 242) umfasst, die im Einsatz betriebsfähig ist, die Oberfläche zu berühren; wobei das Verfahren die folgenden Schritte umfasst:
Erfassen einer Koordinatenposition eines Eingabestifts gegen eine Oberfläche, um ein erfasstes Signal zu erzeugen;
Senden eines Koordinatenpositionssignals an einen Hostcomputer (12) nur dann, wenn der Eingabestift entlang der Oberfläche bewegt wird, wobei das Koordinatenpositionssignal mit dem erfassten Signal verknüpft ist und die Koordinatenposition des Eingabestifts entlang der Oberfläche anzeigt; und
Aufbringen einer haptischen Empfindung als Reaktion darauf, dass das Koordinatenpositionssignal anzeigt, dass sich der Eingabestift an einer bestimmten Koordinatenposition auf der Oberfläche befindet;
**gekennzeichnet durch** den folgenden Schritt:
der Aktor bringt die haptische Empfindung auf, während der Eingabestift in Berührung mit der Oberfläche bleibt.

13. Verfahren nach Anspruch 12, wobei der Eingabestift (220) eine drehbare Kugel (224) in einem Spitzenabschnitt (242) enthält, wobei der Aktor (100) konfiguriert ist, die Kraft auf die drehbare Kugel aufzubringen.

## Revendications

1. Appareil comprenant :
un stylet (34, 220) configuré pour être manipulé contre une surface et configuré pour être utilisé dans une main d'un utilisateur (22) ; le stylet comprenant une pointe (224, 242) servant à le mettre en contact avec la surface ;
un détecteur (28) configuré pour envoyer au moins un signal de détection à un ordinateur hôte (12) sur la base d'une position de coordonnées du stylet uniquement lorsque le stylet est déplacé contre la surface ; et,
un actionneur (30, 100) placé à l'intérieur du stylet, dans lequel l'actionneur est configuré pour appliquer une sensation haptique en réponse à l'au moins un signal de détection indiquant le stylet à une position de coordonnées désignée sur la surface ;
**caractérisé en ce que** :
l'actionneur applique la sensation haptique pendant que le stylet est en contact avec la surface.

2. Appareil selon la revendication 1, dans lequel l'actionneur est configuré pour modifier la longueur du stylet.

3. Appareil selon la revendication 1, comprenant en outre une source d'alimentation disposée dans le stylet.

4. Appareil selon la revendication 1, dans lequel la source d'alimentation comprend une batterie.

5. Appareil selon la revendication 1, dans lequel l'actionneur est configuré pour produire au moins l'une d'une pluralité de sensations d'effort, la pluralité de sensations d'effort comprenant une vibration, une secousse, une texture et un effort constant.

6. Appareil selon la revendication 1, dans lequel l'actionneur comprend une bobine acoustique.

7. Appareil selon la revendication 1, dans lequel une partie de pointe de l'élément de stylet comprend une bille rotative (244).

8. Appareil selon la revendication 7, dans lequel l'actionneur est configuré pour appliquer une résistance contre la bille rotative.

9. Appareil selon la revendication 1, dans lequel l'actionneur est un solénoïde.

10. Appareil selon la revendication 1, dans lequel l'actionneur est configuré pour vibrer.

11. Appareil selon la revendication 1, dans lequel le détecteur est disposé à l'intérieur de la surface.

12. Procédé d'application d'un effet haptique à un stylet (30, 220), le stylet comprenant une pointe (224, 242) servant à entrer en contact avec la surface ; le procédé comprenant les étapes :
de détection d'une position de coordonnées d'un stylet contre une surface pour produire un signal détecté ;
d'envoi d'un signal de position de coordonnées à un ordinateur hôte (12) uniquement lorsque le stylet est déplacé le long de la surface, le signal de position de coordonnées étant associé au signal détecté et indiquant la position de coordonnées du stylet le long de la surface ; et,
d'application d'une sensation haptique en réponse au signal de position de coordonnées indiquant que le stylet se trouve à une position de coordonnées désignée sur la surface ;
**caractérisé en ce que** :
l'actionneur applique la sensation haptique pendant que le stylet reste en contact avec la surface.

13. Procédé selon la revendication 12, dans lequel le stylet (220) comprend une bille rotative (244) dans une partie de pointe (242), l'actionneur (100) étant configuré pour appliquer l'effort à la bille rotative.
